# EUROPÄISCHE PATENTANMELDUNG

(11) **EP 0 530 609 A1**
(43) Veröffentlichungstag der Anmeldung: **10.03.1993**
(21) Anmeldenummer: 92114246.9
(22) Anmeldetag: 20.08.1992
(51) Int. Cl.: F02M 25/00, F02D 19/12

(54) **Vorrichtung zum Zuführen eines Kraftstoff-Zusatzmittels für einen Verbrennungsmotor**

(30) Priorität: 03.09.1991 DE 4129297
(71) Anmelder: Oberland Mangold GmbH, D-82467 Garmisch-Partenkirchen (DE)
(72) Erfinder: Mangold, Anton, W-8100 Garmisch-Partenkirchen (DE); Spannagel, Ulrich, W-8031 Gilching (DE)
(74) Vertreter: Weber, Otto Ernst, Dipl.-Phys.

(57) **Zusammenfassung**

Es werden mehrere Vorrichtungen zum Zuführen eines Kraftstoff-Zusatzmittels für einen Verbrennungsmotor beschrieben. Derartige Zusätze werden unter anderem zur Verbesserung des Betriebs- und Abgasverhaltens, insbesondere zur Zündtemperaturabsenkung in Rußfiltern bei Dieselmotoren eingesetzt. Um eine einfache und dennoch effektive Feindosierung des Zusatzmittels zu gewährleisten, wird an die Mündungsöffnung der von einem Zusatzmittel-Vorratsbehälter (1) kommenden Verbindungsleitung (4) im Luftansaugkanal (9) des Motor (10) ein Kapillarrohr (5) angeordnet. Bei anderen Lösungen sind eine Düse (6) oder poröses Material (7), welches die Verdunstung des Zusatzmittels sicherstellt, vorgesehen. Durch Temperatursensoren (12), insbesondere im Abgasstrom des Motors, kann die Dosierung des Motors bei hohen Abgastemperaturen abgeschaltet werden. Die Förderung des Additivs folgt unmittelbar dem Betriebszustand des Motors. So ist ein ökonomischer Betrieb des Motors gesichert.

## Beschreibung

Die Erfindung betrifft eine Vorrichtung zum Zuführen eines Kraftstoff-Zusatzmittels für einen Verbrennungsmotor, mit einem Zusatzmittel-Vorratsbehälter sowie einer Fördereinrichtung für das Zusatzmittel aus dem Vorratsbehälter.

Bekanntlich werden dem Kraftstoff von Verbrennungsmotoren für Kraftfahrzeuge Zusatzmittel in vielfältiger Art und Anzahl zugesetzt. Es sollen damit unter anderem das Betriebsoder Abgasverhalten, die Verschleißminderung des Motors oder eine Qualitätsverbesserung des Kraftstoffs erreicht werden. Diese Zusatzmittel sind für einig Anwendungsfälle bereits in handelsüblichen Kraftstoffen enthalten. Bei speziellen Aufgabenstellungen - wie im vorliegenden Fall - müssen sie dagegen erst während des Motorbetriebs beigemischt werden.

Bei Dieselmotoren werden Zusatzmittel, sogenannte Additive, im Zusammenhang mit Rußfiltern in der Auspuffanlage eingesetzt. Im Rußfilter sammeln sich naturgemäß Rußpartikel an, so daß nach einer vorgegebenen Betriebszeit eine Entsorgung erforderlich wird. Es sind hierzu Additive bekannt, welche die Zündtemperatur einer auf einem Rußfilter angesammelten Rußschicht deutlich herabsetzen, so daß der Ruß selbsttätig bei den in der Abgasanlage vorherrschenden Temperaturen abbrennt und der Rußfilter damit ausreichend regeneriert wird. Aus Kostengründen muß ein derartiges Additiv sehr genau dosiert werden. Bei hohen Abgastemperaturen strebt man geringe Konzentrationen, beispielsweise 5 bis 15 ppm, während bei niedrigen Temperaturen höhere Dosierungen erforderlich sind, beispielsweise 60 ppm.

Ein derartiges, katalytisch wirkendes Additiv, das dem Motorschmieröl zugesetzt ist und beim bestimmungsgemäßen Betrieb des Motors in ausreichender Menge auch dem Dieselpartikel-Filtersystem mit dem heißen Motorabgas zugeführt wird, ist in der DE 38 09 307 C beschrieben.

Aus der DE 28 54 126 C ist eine gattungsgemäße Vorrichtung zur Zuführung eines katalytisch wirkenden Additivs bekannt. Hierbei wird im Vorratsbehälter Luft durch das Zusatzmittel hindurchgeleitet. Die oberhalb des Flüssigkeitspegels vorhandene Luft ist somit durch die austretenden Luftblasen mit verdampftem Additiv angereichert. Mit Hilfe eines Gebläses wird diese Luft abgesaugt und der Ansaugluft des Verbrennungsmotors beigemischt. Nachteilig hierbei ist, daß die Dosierung vom atmosphärischen Luftdruck und der Umgebungstemperatur abhängt, so daß die gewünschte Feindosierung nicht gewährleistet ist. Es wird zur Vermeidung einer kostenaufwendigen Überdosierung bzw. einer Schlecht-Funktion der Filterregenerierung eine aufwendige Regelung erforderlich. Außerdem ist der mechanische Teil des Gebläses unter den im Motorraum herrschenden Bedingungen störanfällig. Zudem können nur Zusatzmittellösungen mit sehr niedrigem Dampfdruck verwendet werden, welche sicherheitstechnische Risiken bilden.

In der DE 36 26 419 C ist ferner eine Vorrichtung zum Zuführen eines Kraftstoff-Zusatzmittels zur Verbesserung der Kraftstoffqualität für Hochleistungsmotoren beschrieben. Das Zusatzmittel wird hierbei dem Kraftstofftank zugeführt. Die Dosierung erfolgt in Abhängigkeit vom Füllstand des Kraftstofftanks.

Eine andere Zuführung des Zusatzmittels in den Kraftstofftank ist in der DE 38 15 523 C beschrieben. Beide Vorrichtungen dieser Art haben den Nachteil, daß aufgrund der systembedingten Kraftstoffrückführung in den Kraftstofftank eine unerwünschte Zusatzmittel-Anreicherung entstehen kann, was nur durch aufwendige Zusatzeinbauten im Tank oder zusätzlichen Regelaufwand verhindert werden kann.

Der Erfindung liegt die **Aufgabe** zugrunde, eine Vorrichtung der eingangs genannten Art anzugeben, mit welcher eine Feindosierung des Zusatzmittels auf einfache Weise und dennoch effektiv erfolgt.

Diese Aufgabe wird dadurch gelöst, daß eine Verbindungsleitung zwischen dem Vorratsbehälter und dem Luftansaugkanal des Motors und an der Mündung der Verbindungsleitung in den Luftansaugkanal ein Kapillarrohr vorhanden sind.

Diese Lösung hat den Vorteil, daß das aus dem Kapillarrohr in feiner Verteilung austretende Additiv verdunstet und dem Motor unmittelbar und unverzögert zugeführt wird.

Grundsätzlich erzeugt der Motor im Bereich des Ansaugkanals bzw. des Kapillarrohres eine ausreichend hohe Temperatur, um die Verdunstung des Additivs zu gewährleisten. Es kann jedoch zweckmäßig sein, an der Austrittsöffnung des Kapillarrohres ein Heizelement anzuordnen, welches die erforderliche Verdunstungstemperatur erzeugt.

Eine andere Lösung besteht darin, daß an der Austrittsöffnung der Verbindungsleitung innerhalb ein großporiges Material angeordnet ist, an welchem das Kraftstoff-Zusatzmittel zur Verdunstung großflächig verteilt wird.

Als weitere, dritte Lösung ist vorgesehen, daß die Verbindungsleitung mit einer Düse versehen ist, über welche das Zusatzmittel in die Ansaugluft gesprüht wird. Bevorzugt ist die Düse in der Weise ausgebildet, daß die Ansaugluft im Luftansaugkanal des Motors den Düseneffekt unter gleichzeitiger Erzeugung eines Unterdrucks in der Verbindungsleitung bewirkt. Das hat den Vorteil, daß das Zusatzmittel ohne Zuführung zusätzlicher Energie in den Luftansaugkanal gefördert wird.

Eine vierte Lösung besteht darin, daß an der Mündungsöffnung der Verbindungsleitung eine poröse Membrane angeordnet ist, welche durch ihre Kapillarwirkung die Förderung des Additivs übernimmt. Bei Stillstand des Motors wird das Additiv bis zur Dampfsättigung im Saugrohr gefördert. Es steht somit beim Start des Motors eine ausreichend große Menge für den Startrußstoß zur Verfügung.

Alle diese Lösungen haben den Vorteil, daß eine Dosierungsänderung einem schnellen Lastwechsel des Motors folgen kann, so daß die im Brennraum tatsächlich vorliegende Additivmenge exakt dem Lastzustand des Motors entspricht. Die Erfindung vermeidet somit den Nachteil der Trägheit, welche systembedingt mit der Beimischung des Additivs in den Kraftstofftank verbunden ist. Diese Trägheit resultiert aus der Durchlaufzeit des Kraftstoffs durch das Einspritzsystem.

Die Erfindung hat ferner den Vorteil, daß durch die unmittelbare Zuführung im Gegensatz zum Stand der Technik die Kraftstoff-Einspritzdüsen nicht verkoken, was zu einem unsauberen Einspritzbild führt und die Abgasemissionen verschlechtert.

Die Erfindung ist besonders gut zum Einsatz mit Dieselmotoren geeignet, um rußbeladene Dieselpartikelfilter mit Hilfe eines die Zündtemperatur des Rußes herabsetzenden Additivs zu regenerieren.

Ein weiterer wichtiger Vorteil der Erfindung besteht darin, daß bei konstanter Förderung die Konzentration des Additivs, bezogen auf den Kraftstoffverbrauch oder den Luftdurchsatz des Motors selbsttätig der geforderten Fördercharakteristik folgt, also geringere Konzentrationen bei hohen Abgastemperaturen und höheren Dosierungen bei niedrigen Temperaturen. Da die Luftdurchsatzmenge des Motors in erster Näherung proportional zur Motorlast ist, wird das Additiv bei hohen Motortemperaturen, welche hohen Motorlasten entsprechen, niedrig dosiert und umgekehrt, so daß der Additiv-Verbrauch minimiert wird.

Es kann jedoch zweckmäßig sein, daß in der Verbindungsleitung ein gesteuertes Ventil und im Abgasstrom ein Temperatursensor vorhanden sind, und daß die Ventilansteuerung in Abhängigkeit vom Ausgangssignal des Temperatursensors erfolgt. Bevorzugt wird das Ventil in Abhängigkeit von der Temperatur in entsprechenden Intervallen geöffnet bzw. geschlossen. Bei Abgastemperaturen über 550^{o}C, welche zur Verbrennung des angesammelten Rußes ohne zündtemperatursenkendes Zusatzmittel ausreichen, wird die weitere Zuführung abgeschaltet.

Alternativ oder zusätzlich zur temperaturgeregelten Zuführung kann es auch vorteilhaft sein, daß die Zuführung in Abhängigkeit von der Saugluft-Temperatur, dem atmosphärischen Luftdruck, der Motordrehzahl, dem Drosselklappenwinkel und/oder dem Abgasgegendruck geregelt wird.

Zur Erzeugung eines Überdrucks in der Verbindungsleitung ist es zweckmäßig, in die Verbindungsleitung eine Druckpumpe einzusetzen, die im Falle eines Kapillarrohres an der Mündung der Verbindungsleitung als Niederdruckpumpe ausgebildet ist. Bei der Lösung mit einer porösen, eine große Oberfläche aufweisende Verdunstungseinrichtung oder einem getakteten Ventil verwendet man bevorzugt eine Mitteldruckpumpe und im Zusammenhang mit einer Düse ist eine Hochdruckdosierpumpe zweckmäßig. Eine besonders einfache Weiterbildung im Zusammenhang mit einem Kapillarrohr oder einer porösen Membrane besteht darin, daß zur Erzeugung eines Überdrucks eine Gasentwicklungszelle im Zusatzmittel-Vorratsbehälter angeordnet wird. Diese Zelle erzeugt einen Überdruck, der ausreicht, um die Förderung des Zusatzmittels in den Luftansaugkanal sicherzustellen. Es genügt grundsätzlich ein leichter Überdruck in der Grössenordnung von 10 bis 100 mbar.

Es ist ferner zweckmäßig, im Vorratsbehälter eine Pegelüberwachungsvorrichtung und/oder eine Drucküberwachungsvorrichtung anzuordnen. Auf diese Weise kann der Additiv-Vorrat überwacht und eine zuverlässige Versorgung des Abgasstroms sichergestellt werden.

Im übrigen kann vorgesehen sein, daß bei Fehlfunktionen eine Anzeige an den Kraftfahrzeugführer erfolgt.

Nachfolgend wird die Erfindung anhand von vier in der Zeichnung dargestellten Ausführungsbeispielen weiter beschrieben.

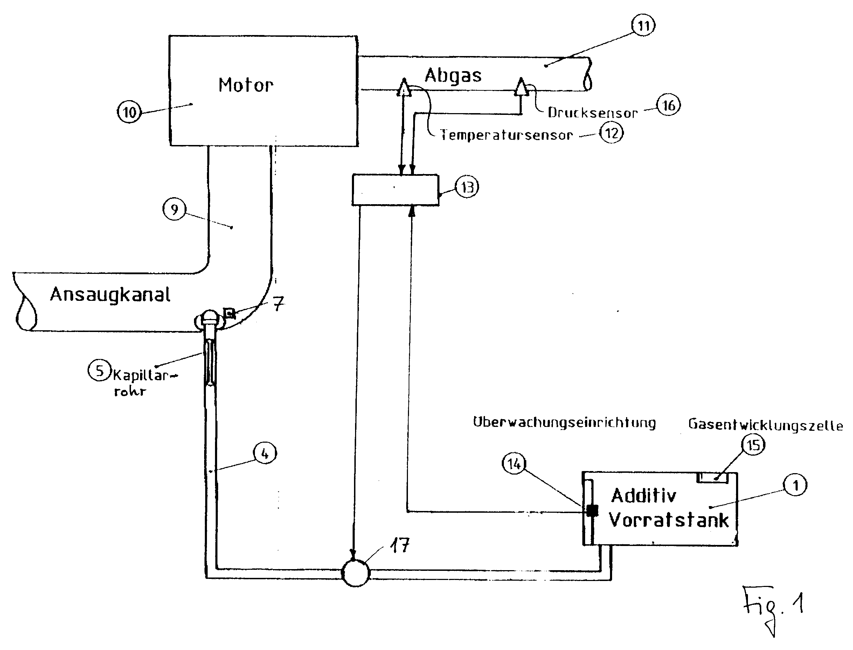

- Fig. 1 bis 4: zeigen schematisch jeweils ein Blockschaltbild einer Vorrichtung zum Zuführen eines Kraftstoff-Zusatzmittels.

Fig. 1 zeigt einen Verbrennungsmotor 10 mit einem Luftansaugkanal 9 und einem Abgasrohr 11. Im Abgasrohr 11 sind ein Temperatursensor 12 sowie ein Drucksensor 16 angeordnet, die beide mit dem Eingang einer elektronischen Auswerteeinheit 13 verbunden sind.

In den Luftansaugkanal 9 mündet eine Verbindungsleitung 4, welche eingangsseitig mit einem Additiv-Vorratstank 1 verbunden ist. Vor der Mündungsöffnung der Verbindungsleitung 4 ist ein Kapillarrohr 5 in der Verbindungsleitung 4 angeordnet. Stromabwärts nach der Mündungsöffnung der Verbindungsleitung 4 befindet sich im Luftansaugkanal 9 eine Heizplatte 7, auf welche aus der Verbindungsleitung 4 austretendes Additiv auftrifft, und welche die erforderliche Verdunstungstemperatur erzeugt, falls sich dies als notwendig erweist.

Der Pegelstand im Vorratsbehälter 1 wird mit einer Überwachungseinrichtung 14 festgestellt, welche ausgangsseitig ebenfalls mit der elektronischen Auswerteeinneit 13 verbunden ist. Außerdem befindet sich eine Gasentwicklungszelle 15 zur Erzeugung eines Überdrucks im Vorratsbehälter 1. Der Überdruck ist ausreichend groß, um das Additiv in den Ansaugkanal zu fördern. Die Gasentwicklungszelle dient lediglich dazu, die Förderung bis zum Kapillarrohr zu sichern. Die eigentliche Förderung und Dosierung in den Saugkanal erfolgt durch die Saugwirkung der Kapillare bzw. der porösen Membrane.

Die elektrische Auswerteeinheit 13 steuert ferner ein Ventil 17 in der Verbindungsleitung 4 zur Freigabe oder zur Unterbrechung der Additiv-Förderung an.

Wenn der Verbrennungsmotor 10 gestartet wird, öffnet die Auswerteeinheit 13 das Ventil 17. Aufgrund des von der Gasentwicklungszelle 15 entwickelten Überdrucks wird das Additiv zum Kapillarrohr 5 gefördert. Das austretende Additiv verdunstet auf dem Heizelement 7, welches ebenfalls von der elektrischen Auswerteeinheit ein-/ausgeschaltet wird und es wird mit der Ansaugluft dem Verbrennungsmotor wohl dosiert zugeführt. Es gelangt von dort über das Abgasrohr 11 zu einem Rußfilter 18, wo es die Zündtemperatur einer dort angesammelten Rußschicht auf Abgastemperatur herabsetzt.

Abhängig von der Temperatur des Abgases oder dem Abgasdruck steuert die elektronische Auswerteeinheit 13 das Ventil 17 an. Überschreitet die Abgastemperatur 550^{o} C, so wird die Verbindungsleitung 4 unterbrochen.

Durch die Konstantförderung des Additivs in Verbindung mit der Änderung der Ansaugluftmenge des Motors proportional zur Motorlast stellt sich selbsttätig eine niedrige Additivkonzentation bei hoher Motorlast und eine hohe Konzentration bei niedriger Motorlast ein. Diese Fördercharakteristik kann ferner durch die Auswerteeinheit 13 verändert werden.

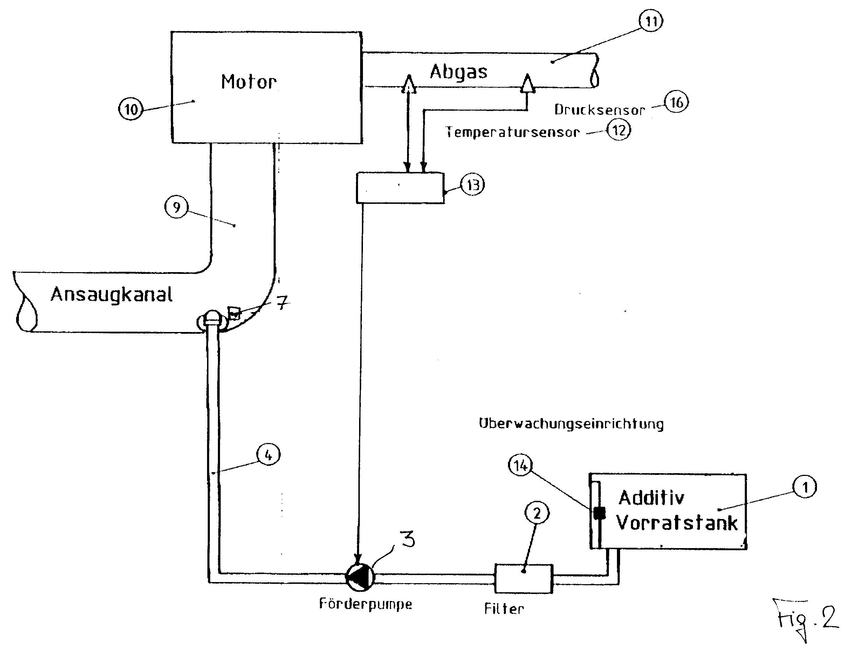

In den Fig. 2 bis 3 sind gleiche Teile wie in Fig. 1 mit gleichen Bezugszeichen versehen, so daß auf eine Beschreibung verzichtet werden kann.

Das Beispiel gemäß Fig. 2 unterscheidet sich vom Beispiel der Fig. 1 dadurch, daß an der Mündungsöffnung der Verbindungsleitung 4, die hier kein Kapillarrohr aufweist, ein poröser Werkstoff mit entsprechend großer Oberfläche angeordnet ist, der auch beheizt sein kann. Das aus der Verbindungsleitung 4 austretende Additiv wird auf der großen Oberfläche verteilt, so daß eine schnelle Verdunstung und Vermischung mit der Ansaugluft erfolgt.

Über eine Mitteldruckpumpe 3 in der Verbindungsleitung 4 wird das Additiv aus dem Vorratsbehälter 1 in den Ansaugkanal 9 gefördert.

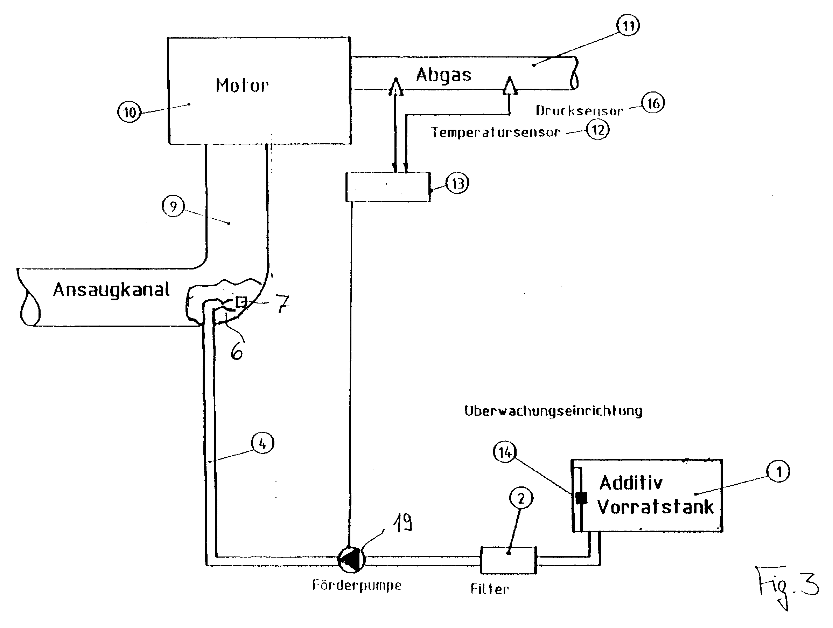

Wie das Beispiel gemäß Fig. 3 veranschaulicht, befindet sich an der Mündungsöffnung der Verbindungsleitung 4 eine Düse 6, durch welche das Additiv in die Ansaugluft gesprüht wird. Die Förderung erfolgt mit Hilfe einer Hochdruckdosierpumpe 19, die - wie die Mitteldruckpumpe 3 beim Beispiel gemäß Fig. 2 - von der elektronischen Auswerteeinheit 13 angesteuert wird. Die Düse 6 ist bevorzugt als Saugdüse ausgebildet.

Es wird beispielsweise im Takt von einigen Sekunden eine Additivmenge im Mikroliter-Bereich zugeführt. Um eine Verunreinigung der Hochdruckdosierpumpe 19 und der Düse 6 durch eventuell aus dem Vorratsbehälter 1 gelöste Partikeln zu verhindern, ist vor der Hochdruckdosierpumpe 19 ein Filter 2 in der Verbindungsleitung 4 angeordnet.

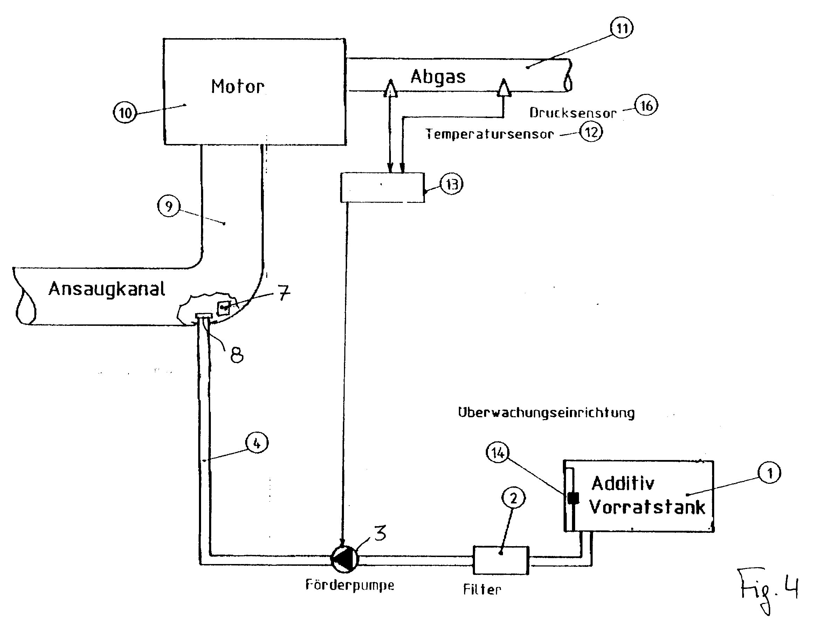

Gemäß Beispiel 4 in Fig. 4 ist in der Mündungsöffnung der Verbindungsleitung 4 eine poröse Membran 8 im Luftansaugkanal 9 angeordnet, welche durch ihre Kapillarwirkung die Förderung des Additivs übernimmt. Die Förderung kann zusätzlich - ähnlich wie beim Beispiel gemäß Fig. 1 - durch eine Gasentwicklungszelle (nicht dargestellt) unterstützt werden.

## Patentansprüche

1. Vorrichtung zum Zuführen eines Kraftstoff-Zusatzmittels für einen Verbrennungsmotor, mit einem Zusatzmittel-Vorratsbehälter sowie einer Fördereinrichtung für das Zusatzmittel aus dem Vorratsbehälter,
dadurch **gekennzeichnet,**
daß eine Verbindungsleitung (4) zwischen dem Vorratsbehälter (1) und dem Luftansaugkanal (9) des Motors (10) und an der Mündung der Verbindungsleitung (4) in den Luftansaugkanal (9) ein Kapillarrohr (5) vorhanden sind.

2. Vorrichtung nach Anspruch 1,
dadurch **gekennzeichnet,**
daß an der Austrittsöffnung des Kapillarrohres (5) ein Heizelement angeordnet ist.

3. Vorrichtung zum Zuführen eines Kraftstoff-Zusatzmittels für einen Verbrennungsmotor, mit einem Zusatzmittel-Vorratsbehälter sowie einer Fördereinrichtung für das Zusatzmittel aus dem Vorratsbehälter,
dadurch **gekennzeichnet,**
daß an der Austrittsöffnung der Verbindungsleitung (4) innerhalb des Luftansaugkanals (9) ein großporiges Material angeordnet ist, an welchem das Kraftstoff-Zusatzmittel zur Verdunstung großflächig verteilt wird.

4. Vorrichtung zum Zuführen eines Kraftstoff-Zusatzmittels für einen Verbrennungsmotor, mit einem Zusatzmittel-Vorratsbehälter sowie einer Fördereinrichtung für das Zusatzmittel aus dem Vorratsbehälter,
dadurch **gekennzeichnet,**
daß die Verbindungsleitung (4) ausgangsseitig mit einer Düse (6) versehen ist, über welche das Zusatzmittel in die Ansaugluft gesprüht wird.

5. Vorrichtung nach Anspruch 4,
dadurch **gekennzeichnet,**
daß die Düse (4) in der Weise ausgebildet ist, daß die Ansaugluft im Luftansaugkanal (9) des Motors (10) den Düseneffekt unter gleichzeitiger Erzeugung eines Unterdrucks in der Verbindungsleitung (4) bewirkt.

6. Vorrichtung zum Zuführen eines Kraftstoff-Zusatzmittels für einen Verbrennungsmotor, mit einem Zusatzmittel-Vorratsbehälter sowie einer Fördereinrichtung für das Zusatzmittel aus dem Vorratsbehälter,
dadurch **gekennzeichnet,**
daß an der Mündungsöffnung der Verbindungsleitung (4) eine poröse Membran (8) angeordnet ist, welche durch ihre Kapillarwirkung die Förderung des Zusatzmittels übernimmt.

7. Vorrichtung nach einem der vorhergehenden Ansprüche,
dadurch **gekennzeichnet,**
daß in der Verbindungsleitung (4) ein gesteuertes Ventil (17) und im Abgasrohr (11) des Motors (10) ein Temperatursensor (12) vorhanden sind, und daß die Ventilansteuerung in Abhängigkeit vom Ausgangssignal des Temperatursensors (12) erfolgt.

8. Vorrichtung nach Anspruch 7,
dadurch **gekennzeichnet,**
daß das Ventil (17) bei einer Abgastemperatur oberhalb von etwa 550^{o} C geschlossen und die Verbindungsleitung (4) unterbrochen wird.

9. Vorrichtung nach einem der vorhergehenden Ansprüche,
dadurch **gekennzeichnet,**
daß Sensoren für die Saugluft-Temperatur im Luftansaugkanal (9), und/oder zur Messung des atmosphärischen Luftdrucks, und/oder eines Drosselklappenwinkels im Luftansaugkanal (9) und/oder der Motordrehzahl, und/oder dem Abgasgegendruck vorhanden sind, und daß das Ventil (17) in Abhängigkeit vom Ausgangssignal der betreffenden Sensoren geregelt wird.

10. Vorrichtung nach einem der vorhergehenden Ansprüche,
dadurch **gekennzeichnet,**
daß in die Verbindungsleitung (4) eine Druckpumpe (3), (19) eingesetzt ist.

11. Vorrichtung nach einem der vorhergehenden Ansprüche,
dadurch **gekennzeichnet,**
daß zur Erzeugung eines Überdrucks eine Gasentwicklungszelle (15) im Vorratsbehälter (1) angeordnet ist.

12. Vorrichtung nach einem der vorhergehenden Ansprüche,
dadurch **gekennzeichnet,**
daß im Vorratsbehälter (1) eine Pegelüberwachungsvorrichtung (14) und/oder eine Drucküberwachungsvorrichtung angeordnet sind.

13. Vorrichtung nach einem der vorhergehenden Ansprüche,
dadurch **gekennzeichnet,**
daß eine Überwachungsvorrichtung zur Detektion von Fehlfunktionen und eine damit verbundene Anzeigevorrichtung vorhanden sind, die zumindest Fehlfunktionen anzeigt.
